# EUROPÄISCHE PATENTSCHRIFT

(11) **EP 3 241 862 B1**
(45) Veröffentlichungstag und Bekanntmachung des Hinweises auf die Patenterteilung: **01.08.2018**
(21) Anmeldenummer: 16168381.8
(22) Anmeldetag: 04.05.2016
(51) Int. Cl.: C08J 5/04, B32B 23/00, C08J 3/12, C08J 5/18

(54) **CARBONPULVERHERSTELLUNGSVERFAHREN**
CARBON POWDER FORMATION METHOD
PROCEDE DE PRODUCTION DE POUDRE CARBONEE

(43) Veröffentlichungstag der Anmeldung: 08.11.2017
(73) Patentinhaber: Otte Kunststofftechnik GmbH, 21684 Stade (DE)
(72) Erfinder: Otte, Bernd, 21717 Fredenbeck (DE)
(74) Vertreter: Hansen, Jochen

(56) Entgegenhaltungen:
- EP-A1- 3 075 808
- WO-A1-2010/010584
- JP-A- 2003 033 915
- KOJIMA A ET AL: "RECYCLING OF RESIN MATRIX COMPOSITE MATERIALS VII: FUTURE PERSPECTIVE OF FRP RECYCLING", ADVANCED COMPOSITE MATERIALS, VSP / BRILL ACADEMIC PUBLISHERS, LEIDEN, NL, Bd. 6, Nr. 3, 1. Januar 1997 (1997-01-01), Seiten 215-225, XP000698004, ISSN: 0924-3046

## Beschreibung

Die Erfindung betrifft ein Herstellungsverfahren für ein Carbonpulver, nämlich ein Pulver aus kohlenstofffaserverstärktem Kunststoff.

In der Regel werden ein- oder zweikomponentige Kunstharzsysteme, nämlich thermoplastische oder duroplastische Harze verwendet, um entweder ganze Bauteile herzustellen oder aber Bauteile bzw. Bauteilabschnitte miteinander dauerhaft zu verbinden oder Bauteile zu reparieren bzw. diese wieder in Stand zu setzen.

Im Stand der Technik wird versucht aus zu recycelnden kohlenstofffaserverstärkten Bauteilen, CFK-Bauteile, ein Carbonpulver durch Mahlen herzustellen. Problematisch ist, dass das so hergestellte Carbonpulver keine exakten und vor allem reproduzierbaren oder vielmehr überhaupt keine bekannten Eigenschaften hat, die in irgendeiner Weise verlässlich wären und so den Einsatz eines solchen Carbonpulvers für gerade relevante Teile wie Teile der Fahrzeug- oder Luftfahrtindustrie ausschließen. Selbst bei Verwendung eines derartigen Carbonpulvers ohne reproduzierbare Eigenschaften kommt es in dessen Verwendung bei eigentlich einfachen Bauteilen schon zu Produktionsmängeln aufgrund der Qualitätsvariation bzw. dessen Unbestimmtheit.

Der vorliegenden Erfindung liegt die Aufgabe zugrunde, ein Carbonpulverherstellungsverfahren aufzuzeigen, das es ermöglicht, ein Carbonpulver mit definierten und reproduzierbaren Eigenschaften herzustellen.

Gelöst wird diese Aufgabe mit einem Carbonpulverherstellungsverfahren gemäß Hauptanspruch.

Das Carbonpulverherstellungsverfahren weist die Schritte auf:
- Herstellen eines unausgehärteten kohlenstofffaserverstärkten-Kunststoff-Prepregs;
- Aufwickeln des kohlenstofffaserverstärkten-Kunststoff-Prepregs mit einer Trennfolie und / oder einem Papier zu einer Rolle;
- Aushärten des zu einer Rolle aufgewickelten kohlenstofffaserverstärkten-Kunststoff-Prepregs bis zu einem vorgegebenen Mindestaushärtegrad;
- Abrollen und Entfernen der Trennfolie und / oder des Papiers von dem ausgehärteten kohlenstofffaserverstärkten-Kunststoff-Prepregs und Schneiden des kohlenstofffaserverstärkten-Kunststoff-Prepregs mittels einer Kurzfaserschneideanordnung auf eine vorgegebene Faserlänge zu Kurzfasern / Flocken
   und
- Mahlen des zu Kurzfasern / Flocken geschnittenen kohlenstofffaserverstärkten-Kunststoff-Prepregs.

Hierdurch ist es erstmalig möglich, ein Carbonpulver, also ein Pulver aus einem kohlenstofffaserverstärkten Kunststoff herzustellen, das vielfältig verwendet werden kann. Das Pulver kann als Füllstoff, als Kleber, zur Herstellung elektrisch besonders gut leitfähiger Beschichtungen und zur Verstärkung von Press- und Füllmassen sowie weiteren Anwendungen genutzt werden.

Es soll an dieser Stelle angemerkt werden, dass das Pulver nicht aus reinen Kohlenstofffasern besteht, sondern aus einem kohlenstofffaserverstärktem Kunststoff ohne Entfernung des Kunststoffanteils hergestellt wird.

Entscheidend an dem hier aufgezeigten Carbonpulverherstellungsverfahren sind die genau voreinstellbaren Eigenschaften des Carbonpulvers durch Variation des Ausgangsmaterials des Prepregs. Nur hierdurch kann tatsächlich ein qualitativ hochwertiges und gleichbleibend gutes Carbonpulver hergestellt werden, dessen Materialeigenschaften tatsächlich bekannt sind. Insbesondere sind die Eigenschaften, wie Carbonfaseranteil, Harzanteil, Faserdichte, Schüttdichte, Zugfestigkeit, Zug-E-Modul usw. bekannt, da diese durch das Ausgangsmaterial des Prepregs voreingestellt werden und es zu keiner ungewollten Materialvermischung kommt, wie es üblicherweise bei ausgehärteten CFK-Bauteilen der Fall ist, nämlich Materialmix unterschiedlicher UD- und Gewebelagen von unterschiedlichen Prepregtypen.

Das Aushärten des hergestellten Prepregs kann bis zu einem Mindestaushärtegrad von wenigstens 80 % erfolgen. Bevorzugt kann das Aushärten auch bis zu einem Mindestaushärtegrad von wenigstens 90 % oder 100 % erfolgen.

Das Schneiden mittels der Kurzfaserschneideanordnung kann besonders bevorzugt bzw. insbesondere mit einer Guillotinenschere oder einer Guillotinenschneidanordnung oder einer Schneidradanordnung, erfolgen. Eine Guillotinenschere oder eine Guillotinenschneidanordnung ermöglichen das sehr effiziente aber zudem auch exakte Schneiden der ausgehärteten Prepregs, so dass die hergestellten Schnittstücke oder Flocken rieselfähig sind und gleichzeitig die Schneidvorrichtungen nicht verkleben, wie es bei nicht ausgehärteten kohlenstofffaserverstärkten Kunststoffen oder gar bei Kohlenstofffasern der Fall wäre. Alternativ kann auch eine Schneidradanordnung verwendet werden, die derart ausgestaltet ist, dass auf einer Welle radial nach außen zeigenden Schneidklingen angeordnet sind, die dann die Schnitte ausführen. Die Gegenlager für die Klingen der Schneidradanordnung werden entsprechend ausgestaltet.

Das Schneiden zu Kurzfasern kann bevorzugt bis zu einer Faserlänge von 4 bis 8 mm erfolgen. Bevorzugt erfolgt das Schneiden zu Kurzfasern zu einer Faserlänge von 6 mm. Diese Faserlängen haben sich beim Mahlvorgang als besonders einfach und effizient erwiesen.

In einer weiteren bevorzugten Ausführungsform werden die kohlenstofffaserverstärkten-Kunststoff-Prepregs mit unidirektionalen Fasern ausgebildet, was zu einem leichteren Schneiden und selbstständigen seitlichen Trennen der Flocken führt. Bahnbreiten der Prepregs von 60 cm sind dann problemlos schneidbar, da diese in Flocken zerfallen. Aber auch andere Prepregtypen können mit entsprechenden Schneidvorrichtungen geschnitten werden, so dass diese im Anschluss gemahlen werden können.

Das Mahlen der geschnittenen und wenigstens teilweise ausgehärteten kohlenstofffaserverstärkten Kunststoffe erfolgt insbesondere und besonders bevorzugt mit einer Excenter-Schwingmühle, kann aber auch alternativ oder ergänzend mit einer Stabmühle und / oder Kugelmühle ausgeführt werden.

Das Aushärten kann bevorzugt in einer Zeit von 20 bis 30 Stunden und / oder in 24 Stunden erfolgen, wobei die Temperatur beim Aushärten im Bereich von 60°C bis 150°C oder bei 90°C liegt. Typischerweise hat sich gezeigt, dass ein Aushärten im Bereich um 24 Stunden bei 90°C äußerst effizient, ressourcenschonend und ausreichend ist, wobei insbesondere die Kunststoffe nicht zerstört werden, was bei einem überhitzen der Fall wäre.

Das Aushärten kann bevorzugt in einem Ofen oder alternativ in einem Autoklaven erfolgen. Ein Autoklav ist auch im drucklosen Betrieb fahrbar, um die Prepregs auszuhärten. Es kommt lediglich auf die Wärmeeinbringung an.

Als kohlenstofffaserverstärkte-Kunststoff-Prepregs können in einer weiteren Ausgestaltungsvariante lediglich kohlenstofffaserverstärkte-Kunststoff-Prepregs-Randstreifen, nämlich die eigentlich nicht für die Verwendung von kohlenstofffaserverstärkten-Kunststoff-Prepregs nutzbaren Randstreifen, die während der Produktion der kohlenstofffaserverstärkten-Kunststoff-Prepregs entstehen, verwendet werden, wodurch ein tatsächliches hochqualitatives Abfallrecycling entsteht, nämlich Verwertung der nicht nutzbaren Randstreifen, die eigentlich produktionsbedingte Abfallprodukte darstellen. Während der Prepregproduktion müssen zur Qualitätsoptimierung die Ränder der hergestellten Prepregs geschnitten werden, wobei deren Abschnitt so weiter prozessiert werden kann, indem diese aufgewickelt und dem Verfahren zugeführt werden.

Das Mahlen kann bis zu einem Carbonpulver mit Talkumeigenschaften oder Talkumqualität erfolgen, was bisher im Stand der Technik niemals erreicht worden ist. Hierbei fühlt sich das Carbonpulver was aus Kohlenstofffasern und Kunststoff besteht sehr geschmeidig an und bietet neue Eigenschaften an, die mit bisherigen Carbonpulver nicht realisierbar sind.

Nachfolgend werden Ausführungsbeispiele der Erfindung anhand der beiliegenden Abbildungen in der nachfolgenden Beschreibung der Abbildungen beschrieben, wobei diese die Erfindung erläutern sollen und nicht beschränkend zu werten sind:
Es zeigen:
- Abb. 1: ein unausgehärtetes kohlenstofffaserverstärktes-Kunststoff-Prepreg, aufgewickelt zu einer Rolle;
- Abb. 2: wenigstens teilweise ausgehärtetes kohlenstofffaserverstärktes-Kunststoff-Prepreg, zu Kurzfasern mittels einer Kurzfaserschneideanordnung geschnitten;
- Abb. 3: ein mit dem erfindungsgemäßen Herstellungsverfahren hergestelltes Carbonpulver;
- Abb. 4: eine Vergrößerung des hergestellten Carbonpulvers aus Abb. 3 und
- Abb. 5: eine schematische Darstellung des Verfahrens zur Carbonpulverherstellung.

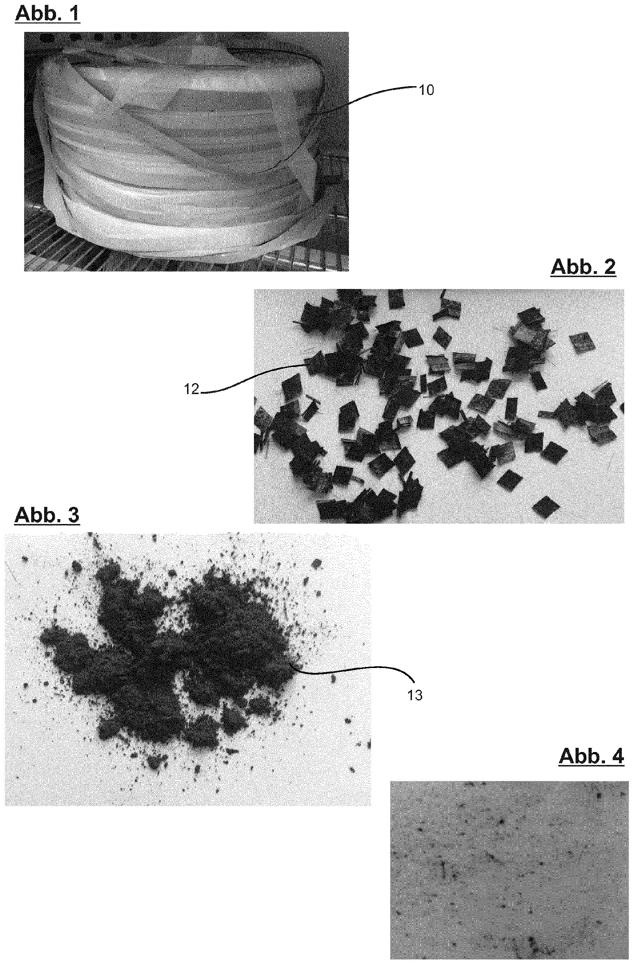

In **Abb. 1** ist ein unausgehärtetes kohlenstofffaserverstärktes-Kunststoff-Prepreg, aufgewickelt zu einer Rolle 10 dargestellt.

Das im Stand der Technik bekannte Herstellungsverfahren für kohlenstofffaserverstärkte-Kunststoff-Prepregs wird genutzt, um entsprechende Prepreg-Rohlinge herzustellen. Diese Prepreg-Rohlinge können normalerweise für die Produktion von großflächigen CFK-Bauteilen über sog. Tape-Leger verwendet werden. Hierzu werden die einzelnen Schichten der Prepregs wenigstens mittels einem Papier und / oder einer Trennfolie voneinander getrennt, so dass diese leichter abgerollt werden können, wenn diese genutzt werden. Typischerweise wird das Papier und / oder die Trennfolie unmittelbar beim Herstellen eines CFK-Bauteils abgezogen und entsorgt, so dass das Prepreg unmittelbar auf der Fläche abgerollt wird und nach Fertigstellung des Rohbauteils ausgehärtet wird, was in der Regel mit Hilfe eines Autoklaven erfolgt.

In dem diesseitig offenbarten Carbonpulverherstellungsverfahren wird jedoch von dem aufgerollten und nicht ausgehärteten Prepreg das Papier und / oder die Trennfolie während des Aushärtens nicht entfernt, sondern bleibt auf dem Prepreg vorhanden. Dies ist wichtig, da das Prepreg nach dem Aushärten wieder abgerollt und einer entsprechenden Schneidvorrichtung zur Herstellung der Kurzfasern zugeführt werden muss.

**Abb. 2** zeigt wenigstens teilweise ausgehärtetes kohlenstofffaserverstärktes-Kunststoff-Prepreg, welches zu Kurzfasern mittels einer Kurzfaserschneideanordnung geschnitten 12 wurde.

Nach dem Abrollen des ausgehärteten Prepregs wird dieses einer Kurzfaserschneidanordnung zugeführt und zu Kurzfasern geschnitten, wobei es bei unidirektionalen Fasern im Prepreg ausreichend ist, dass nur ein Schnitt senkrecht zu der Faserausrichtung der unidirektionalen Fasern erfolgt, da das Prepreg von selbst in senkrechter Richtung zur Faserausrichtung in kleinere Segmentabschnitte zerfällt, da keinerlei Festigkeit in dieser Richtung besteht und die Faser selber als Bruchlinien dienen. Bei anderen Faserausrichtungen kann es notwendig sein, neben dem Schnitt in senkrechter Richtung zur Prepregausrichtung noch weitere Schnitte parallel zur Prepregausrichtung zu tätigen.

In **Abb. 3** ist ein mit dem erfindungsgemäßen Herstellungsverfahren hergestelltes Carbonpulver 13 dargestellt.

Das Carbonpulver, welches hier dargestellt ist, hat nach dem Mahlen, was in einer besonders bevorzugten Ausführungsform mit einer Excenter-Schwingmühle unter Einsatz von Stabmühlentechnik hergestellt worden ist, einen Korndurchmesser im Bereich von ≤ 300 µm.

**Abb. 4** zeigt eine Vergrößerung des hergestellten Carbonpulvers 13 aus Abb. 3, wobei hier die sehr gute Homogenität des nahezu talkumähnlichen Carbonpulvers erkennbar ist.

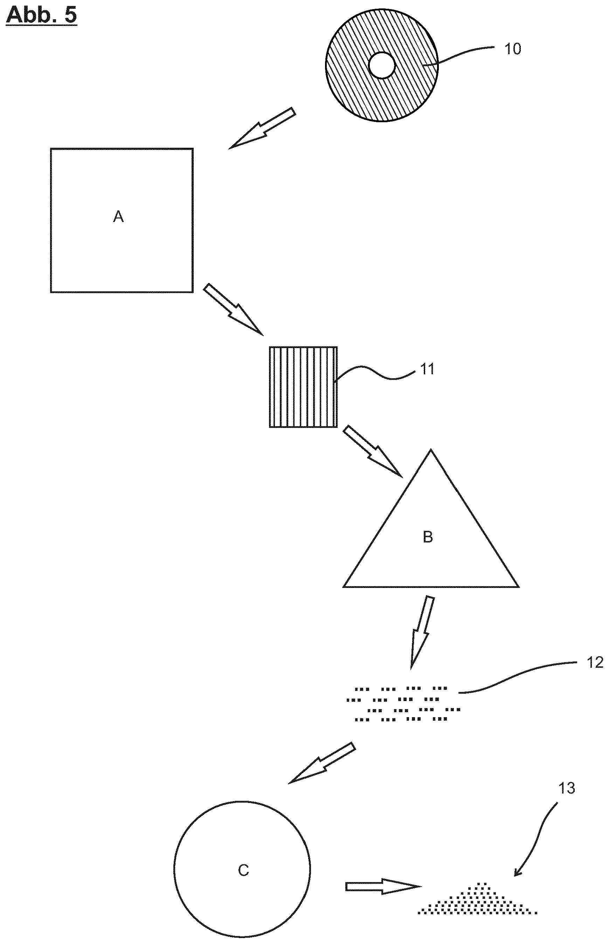

In **Abb. 5** ist eine schematische Darstellung des Verfahrens zur Carbonpulverherstellung gezeigt.

Zunächst wird ein unausgehärtetes kohlenstofffaserverstärktes-Kunststoff-Prepreg zu einer Rolle 10 aufgewickelt, wobei die einzelnen Prepreg-Lagen voneinander durch ein Papier und / oder eine Trennfolie getrennt werden.

Diese Rolle 10 wird dann in einen Ofen zum Aushärten A eingebracht, wo das kohlenstofffaserverstärkte-Kunststoff-Prepreg entsprechend den bekannten Herstellervorgaben bis zu einem Aushärtegrad von 80 bis 90 % ausgehärtet wird, was in der Regel nach etwa 24 Stunden bei 90°C erreicht wird.

Nach dem Aushärten A erfolgt ein Abwickeln des kohlenstofffaserverstärkten-Kunststoff-Prepregs und gleichzeitiges Entfernen des Papiers und / oder der Trennfolie zu einem wenigstens teilweise ausgehärteten kohlenstofffaserverstärkten-Kunststoff-Prepreg, abgewickelt und frei von Papier und / oder Trennfolie 11, das einer Kurzfaserschneidanordnung zugeführt wird, in der ein Kurzfaserschneiden B erfolgt.

Das Kurzfaserschneiden B erfolgt in einem besonderen Ausführungsbeispiels mittels einer Guillotinenschere oder einer Guillotinenschneidanordnung oder einer Schneidradanordnung. Hierbei werden beispielsweise 400 Schnitte pro Minute realisiert, wobei bei entsprechendem Vorschub Schnitte im Bereich von 4 bis 8 mm, insbesondere 6 mm, realisiert werden können. Alternativ wird mittels einer Schneidradanordnung, deren Messer auf einem rotierenden Rad angeordnet sind und einen Schneidabstand von 4 bis 8 mm bzw. insbesondere 6 mm aufweisen, ein entsprechendes Kurzfaserschneiden B realisiert.

Als Ergebnis fallen nach dem Schneiden bei unidirektionalen Faserausrichtungen innerhalb der kohlenstofffaserverstärkten-Kunststoff-Prepregs nahezu gleich große und im Wesentlichen quadratisch ausfallende Flocken 12 ab, die aus wenigstens teilweise ausgehärtetem Prepreg bestehen und aufgrund der Tatsache, dass wenigstens eine teilweise Aushärtung im Bereich von mehr als 80 % vorliegt, keine Klebrigkeit mehr gegeben ist, so dass die mittels dem Kurzfaserschneiden B hergestellten Flocken 12 nicht aneinander haften und im Wesentlichen rieselfähig bleiben.

Diese Kurzfasern / Flocken 12 aus wenigstens teilweise ausgehärtetem Prepreg werden dann einer Vorrichtung zum Mahlen C zugeführt, die die Kurzfasern / Flocken 12 zu einem Carbonpulver 13 mahlen. Hierzu wird in einer besonders bevorzugten Ausführungsvariante eine Excenter-Schwingmühle verwendet, insbesondere unter Verwendung von Stabmühlentechnik, nämlich der Verwendung von kleinen Stäben und nicht Kugeln, die innerhalb eines Mahlraumes die Kurzfasern / Flocken 12 zermahlen und zerschlagen und zerkleinern. Hierbei ist die Excenter-Schwingmühle in einer besonders bevorzugten Ausführungsform mit einer Unwucht ausgestattet, wobei die Maschine auch auf Federn gelagert sein könnte. Die entsprechenden Stäbe sind als Rundstäbe ausgestaltet und aus entsprechendem Material gefertigt, so dass sie äußerst durabel sind.

### Bezugszeichenliste

- 10: unausgehärtetes kohlenstofffaserverstärktes-Kunststoff-Prepreg, aufgewickelt zu einer Rolle
- 11: wenigstens teilweise ausgehärtetes kohlenstofffaserverstärktes-Kunststoff-Prepreg, abgewickelt und frei von Papier und / oder Trennfolie
- 12: wenigstens teilweise ausgehärtetes kohlenstofffaserverstärktes-Kunststoff-Prepreg, zu Kurzfasern mittels einer Kurzfaserschneideanordnung geschnitten, Flocken
- 13: Carbonpulver
- A: Aushärten
- B: Kurzfaserschneiden
- C: Mahlen

## Patentansprüche

1. Carbonpulverherstellungsverfahren
**aufweisend die Schritte:**
- Herstellen eines unausgehärteten kohlenstofffaserverstärkten-Kunststoff-Prepregs;
- Aufwickeln des kohlenstofffaserverstärkten-Kunststoff-Prepregs mit einer Trennfolie und / oder einem Papier zu einer Rolle (10);
- Aushärten des zu einer Rolle aufgewickelten kohlenstofffaserverstärkten-Kunststoff-Prepregs (10) bis zu einem vorgegebenen Mindestaushärtegrad [A];
- Abrollen und Entfernen der Trennfolie und / oder des Papiers von dem ausgehärteten kohlenstofffaserverstärkten-Kunststoff-Prepregs (11) und Schneiden des kohlenstofffaserverstärkten-Kunststoff-Prepregs mittels einer Kurzfaserschneideanordnung auf eine vorgegebene Faserlänge [B] zu Kurzfasern / Flocken (12)
und
- Mahlen des zu Kurzfasern / Flocken (12) geschnittenen kohlenstofffaserverstärkten-Kunststoff-Prepregs [C].

2. Carbonpulverherstellungsverfahren nach Anspruch 1,
**dadurch gekennzeichnet, dass**
das Aushärten bis zu einem Mindestaushärtegrad von wenigstens 80 % oder von wenigstens 90 % oder 100 % erfolgt.

3. Carbonpulverherstellungsverfahren nach Anspruch 1 oder 2,
**dadurch gekennzeichnet, dass**
das Schneiden [B] mittels der Kurzfaserschneideanordnung, nämlich einer Guillotinenschere oder einer Guillotinenschneidanordnung oder einer Schneidradanordnung, erfolgt.

4. Carbonpulverherstellungsverfahren nach Anspruch 1, 2 oder 3,
**dadurch gekennzeichnet, dass**
das Schneiden [B] zu Kurzfasern zu einer Faserlänge von 4 bis 8 mm oder 6 mm erfolgt.

5. Carbonpulverherstellungsverfahren nach einem der vorangehenden Ansprüche,
**dadurch gekennzeichnet, dass**
die kohlenstofffaserverstärkten-Kunststoff-Prepregs mit unidirektionalen Fasern ausgebildet werden.

6. Carbonpulverherstellungsverfahren nach einem der vorangehenden Ansprüche,
**dadurch gekennzeichnet, dass**
das Mahlen [C] mit einer Excenter-Schwingmühle, Stabmühle und / oder Kugelmühle erfolgt.

7. Carbonpulverherstellungsverfahren nach einem der vorangehenden Ansprüche,
**dadurch gekennzeichnet, dass**
das Aushärten in einer Zeit von 20 bis 30 Stunden und / oder in 24 Stunden erfolgt, wobei die Temperatur beim Aushärten im Bereich von 60°C bis 150°C oder bei 90°C liegt.

8. Carbonpulverherstellungsverfahren nach einem der vorangehenden Ansprüche,
**dadurch gekennzeichnet, dass**
das Aushärten in einem Ofen oder Autoklaven erfolgt.

9. Carbonpulverherstellungsverfahren nach einem der vorangehenden Ansprüche,
**dadurch gekennzeichnet, dass**
als kohlenstofffaserverstärkten-Kunststoff-Prepregs für das herzustellende Carbonpulver lediglich nicht für die eigentliche Verwendung von kohlenstofffaserverstärkten-Kunststoff-Prepregs nutzbare Randstreifen, die während der Produktion der kohlenstofffaserverstärkten-Kunststoff-Prepregs entstehen, verwendet werden.

## Claims

1. A carbon powder formation method
**comprising the following steps:**
- producing an uncured carbon-fibre-reinforced plastic prepreg;
- winding the carbon-fibre-reinforced plastic prepreg into a roll (10) with a release film and/or paper;
- curing the carbon-fibre-reinforced plastic prepreg (10) wound into a roll to a predefined minimum degree of cure [A];
- unrolling and removing the release film and/or paper from the cured carbon-fibre-reinforced plastic prepreg (11) and cutting the carbon-fibre-reinforced plastic prepreg to a predefined fibre length [B] using a short-fibre cutting arrangement to obtain short fibres / flocks (12) and
- milling the carbon-fibre-reinforced plastic prepreg [C] which has been cut into short fibres / flocks (12).

2. The carbon powder formation method according to claim 1,
**characterised in that**
the curing takes place to a minimum degree of cure of at least 80% or of at least 90% or 100%.

3. The carbon powder formation method according to claim 1 or 2,
**characterised in that**
the cutting [B] takes place using the short-fibre cutting arrangement, namely guillotine scissors or a guillotine cutting arrangement or a cutting wheel arrangement.

4. The carbon powder formation method according to claim 1, 2 or 3,
**characterised in that**
the cutting [B] into short fibres takes place to a fibre length of 4 to 8 mm or 6 mm.

5. The carbon powder formation method according to one of the preceding claims,
**characterised in that**
the carbon-fibre-reinforced plastic prepregs are formed with unidirectional fibres.

6. The carbon powder formation method according to one of the preceding claims,
**characterised in that**
the milling [C] takes place using an eccentric vibrating mill, rod mill and/or ball mill.

7. The carbon powder formation method according to one of the preceding claims,
**characterised in that**
the curing takes place over a period of 20 to 30 hours and/or over 24 hours, the temperature during curing being in the range of 60°C to 150°C or being 90°C.

8. The carbon powder formation method according to one of the preceding claims,
**characterised in that**
the curing takes place in an oven or autoclave.

9. The carbon powder formation method according to one of the preceding claims,
**characterised in that**
only edge strips that cannot be utilised for the actual use of carbon-fibre-reinforced plastic prepregs, which are obtained during the production of the carbon-fibre-reinforced plastic prepregs, are used as carbon-fibre-reinforced plastic prepregs for the carbon powder to be produced.

## Revendications

1. Procédé de fabrication de poudre de carbone
**comprenant les étapes consistant :**
- à fabriquer un préimprégné en plastique renforcé de fibres de carbone non durci ;
- à enrouler en un rouleau (10) le préimprégné en plastique renforcé de fibres de carbone avec un film de séparation et/ou un papier ;
- à durcir le préimprégné en plastique renforcé de fibres de carbone (10) enroulé en un rouleau jusqu'à un degré de durcissement minimal prédéterminé [A] ;
- à dérouler et à enlever le film de séparation et/ou le papier du préimprégné en plastique renforcé de fibres de carbone durci (11) et à couper en fibres courtes / flocons (12) à une longueur de fibres prédéterminée [B] le préimprégné en plastique renforcé de fibres de carbone au moyen d'un dispositif de coupe en fibres courtes et
- à broyer le préimprégné en plastique renforcé de fibres de carbone découpé en fibres courtes / flocons (12) [C].

2. Procédé de fabrication de poudre de carbone selon la revendication 1,
**caractérisé en ce que**
le durcissement est effectué jusqu'à un degré de durcissement minimal d'au moins 80 % ou d'au moins 90 % ou de 100 %.

3. Procédé de fabrication de poudre de carbone selon la revendication 1 ou 2,
**caractérisé en ce que**
la coupe [B] est effectuée au moyen du dispositif de coupe en fibres courtes, à savoir une cisaille guillotine ou un dispositif de coupe à guillotine ou un dispositif à roue de coupe.

4. Procédés de fabrication de poudre de carbone selon la revendication 1, 2 ou 3,
**caractérisé en ce que**
la coupe [B] en fibres courtes est effectuée à une longueur de 4 à 8 mm ou de 6 mm.

5. Procédé de fabrication de poudre de carbone selon l'une des revendications précédentes,
**caractérisé en ce que**
les préimprégnés en plastique renforcé de fibres de carbone sont formés avec des fibres unidirectionnelles.

6. Procédé de fabrication de poudre de carbone selon l'une des revendications précédentes,
**caractérisé en ce que**
le broyage [C] est effectué avec un broyeur vibrant à excentrique, un broyeur à barres et/ou un broyeur à billes.

7. Procédé de fabrication de poudre de carbone selon l'une des revendications précédentes,
**caractérisé en ce que**
le durcissement est réalisé pendant 20 à 30 heures et/ou en 24 heures, la température pendant le durcissement étant comprise entre 60 °C et 150 °C ou de 90 °C.

8. Procédé de fabrication de poudre de carbone selon l'une des revendications précédentes,
**caractérisé en ce que**
le durcissement est réalisé dans un four ou un autoclave.

9. Procédé de fabrication de poudre de carbone selon l'une des revendications précédentes,
**caractérisé en ce que**
pour la poudre de carbone à produire, on utilise en tant que préimprégnés en plastique renforcé de fibres de carbone uniquement des bandes de bordure qui ne sont pas exploitables pour l'utilisation effective de préimprégnés en plastique renforcé de fibres de carbone et qui sont produites lors de la production des préimprégnés en plastique renforcé de fibres de carbone.
